(19) Europäisches Patentamt / European Patent Office / Office européen des brevets

(11) **EP 2 498 089 B1**

(12) **EUROPEAN PATENT SPECIFICATION**

(45) Date of publication and mention
of the grant of the patent:
**17.04.2019 Bulletin 2019/16**

(51) Int Cl.:
*G01N 30/02* (2006.01)   *G01N 30/60* (2006.01)
*B01D 17/00* (2006.01)   *B01D 59/16* (2006.01)

(21) Application number: **12382015.1**

(22) Date of filing: **18.01.2012**

(54) **THERMOGRAVITATIONAL MICROCOLUMN FOR DETERMINING THE THERMAL DIFFUSION COEFFICIENT OF BIOLOGICAL FLUIDS AND SYNTHETIC AND BIOLOGICAL COLLOIDAL FLUIDS**

THERMOGRAVITATIONS-MIKROSÄULE ZUR BESTIMMUNG DES THERMODIFFUSIONSKOEFFIZIENTEN BIOLOGISCHER FLÜSSIGKEITEN UND SYNTHETISCHER UND BIOLOGISCHER KOLLOIDFLÜSSIGKEITEN

MICRO-COLONNE THERMO-GRAVITATIONNELLE POUR DÉTERMINER LE COEFFICIENT DE DIFFUSION THERMIQUE DES FLUIDES BIOLOGIQUES ET FLUIDES COLLOÏDES SYNTHÉTIQUES ET BIOLOGIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.01.2011 ES 201130055**

(43) Date of publication of application:
**12.09.2012 Bulletin 2012/37**

(73) Proprietors:
• **Mondragon Goi Eskola Politeknikoa Jose Maria Arizmendiarrieta, S.COOP.**
**20500 Arrasate-Mondragon (ES)**
• **Forschungszentrum Jülich GmbH**
**52425 Jülich (DE)**

(72) Inventors:
• **Martín Mayor, Alain**
**20500 Arrasate-Mondragon (ES)**
• **Bou-Ali Saidi, Mohammed Mounir**
**48230 Elorrio (ES)**

• **Gandarias Mintegui, Endika**
**48200 Durango (ES)**
• **Aristimuño Osoro, Patxi Xabier**
**20230 Legazpi (ES)**
• **Wiegand, Simone**
**52428 Jülich (DE)**

(74) Representative: **Igartua, Ismael et al**
**Galbaian S. Coop.**
**Garaia Parke Teknologikoa**
**Goiru Kalea 1**
**20500 Arrasate-Mondragón (ES)**

(56) References cited:
**GB-A- 725 754   US-A1- 2006 134 683**

• **Javier Valencia ET AL: "Validity Limits of the FJO Thermogravitational Column Theory" In: "Thermal Nonequilibrium Phenomena in Fluid Mixtures", 1 January 2002 (2002-01-01), Springer, Berlin, Heidelberg, XP055526994, ISBN: 978-3-540-43231-9 pages 233-249, DOI: 10.1007/3-540-45791-7_12,**

**Description**

TECHNICAL FIELD

The invention relates to microcolumns for measuring thermodiffusion in biological fluids and synthetic and biological colloidal fluids, and more specifically to thermogravitational microcolumns for determining the thermal diffusion coefficient of said fluids.

PRIOR ART

Transport properties determined by means of the application of the thermogravitational technique are of great importance in all processes in which the phenomenon of diffusion plays a part. Diffusion is the name given to the net transport of a substance inside a phase that may be gaseous, liquid or solid. This transport of matter can be caused by three types of gradients: pressure, concentration or temperature. When the gradient is a temperature gradient the phenomenon is known as thermodiffusion.

Liquid transport processes caused by the phenomenon of thermodiffusion have been of considerable use in problems as diverse as the analysis of hydrodynamic instability, the transport of matter in living beings, and in certain practical problems such as the fractioning of polymers and modelling for the optimal use of oilfields. Today the use of thermal diffusion is also arousing great interest in the field of materials applied to micro-electromechanical systems (MEMS) and to synthetic and/or biological colloidal systems.

The phenomenon of thermodiffusion in fluids is widely known, as is the fact that a temperature gradient causes a redistribution of concentration in said fluid. The relevant magnitude in the description of the phenomenon of thermodiffusion is the Soret coefficient, expressed by:

$$S_T = {D_T}/{D},$$

where $D_T$ is the thermal diffusion coefficient of the fluid and D the standard or molecular diffusion coefficient of said fluid. There are two known experimental procedures for determining these transport coefficients, based on a purely non-convective and convective system. The first case corresponds to the thermal diffusion cell and the second to the thermogravitational cell. The measurements carried out in these cells may be seriously affected by the presence of convective disturbances caused by hydrodynamic instability or by the existence of lateral temperature gradients. For the purposes of preventing these disturbances, separation measurements have been carried out in microgravity and the transport coefficients of mixtures in these conditions have been determined. Although the results are not conclusive, they appear to point to significant differences with the values obtained on the Earth's surface. Improvements have also been made to non-convective experimental devices and optical analysis methods have been refined. Nevertheless, such is the small scale of the effect, particularly in separation, that most of the experimental measurements obtained with these techniques are highly inaccurate.

In contrast, in a thermogravitational column the elementary effect of thermal diffusion separation is combined with vertical convective currents, giving rise to an amplified separation between the ends of the column, which may be both positive and negative. In the case of positive separation, it is the least dense component of a binary mixture that moves towards the hot wall, giving rise to some enrichment in the upper part of the cell, while the most dense component is enriched in the lower part, as a result of which the Soret coefficient and the thermal diffusion coefficient are positive. In the case of a negative separation, however, it is the least dense component that is found in the upper part of the column, giving rise to a potentially unstable separation, as a result of which $S_T$ and $D_T$ are negative.

The results obtained reveal several advantages of this method, such as the fact that the stationary separation is separate to the thermal gradient, rendering exact monitoring of the temperatures unnecessary. In the case of negative separations, an adverse density gradient has also been determined, by operating at all times at various orders of magnitude above the critical value of the Grashof number. In addition, the reproducibility of the experimental measurements obtained by means of this method demonstrates the possibilities of the thermogravitational method in determining transport properties for liquid mixtures, operating both in flat and cylindrical configurations at different aspect ratios, and even with new experimental procedures, such as laser velocimetry.

Cylindrical thermogravitational columns are known from prior art, such as those disclosed in patent documents US2852578A, GB725754A, GB725753A and US2723033A. However, the coefficient $D_T$ (the thermal diffusion coefficient of the fluid) cannot be obtained in said columns in order to calculate the Soret coefficient, as it is not within the limits of the FJO theory ("FURRY, JONES and ONSANGER" theory). Columns that are within the limits of the FJO theory enable the possibility of determining the thermodiffusion coefficient $D_T$ from the stationary separation measurements, apart from enabling the possibility of determining the degree of separation of the fluid for analysis.

The article "Thermodiffusion coefficients of binary and ternary hydrocarbon mixtures", by P. Blanco, M. M. Bou-Ali, J. K. Platten, D. Alonso de Mezquia, J. A. Madariaga and C. Santamaría and J. Chem. Phys. 132, 114506 (2010), discloses a column with which the coefficient $D_T$ of a fluid can be determined, as it lies within the limits of the FJO theory, the thermal diffusion coefficient of said fluid being capable of being determined. However, said column is flat and has the drawback, for example, of being large in size, which means that a large (and expensive) amount of biological fluid for analysis must be used.

The document US 2006/0134683 A1 discloses a microcolumn comprising a chamber that can be disposed in a substantially vertical position, and a cover on each side of the chamber, both covers withstanding different temperatures, so that a temperature gradient is present between two faces of the chamber.

The article titled "Validity Limits of the FJO Thermogravitational Column Theory" by Javier Valencia ET AL (published in "Thermal Nonequilibrium Phenomena in Fluid Mixtures", pages 233-249, 1 January 2002, Springer) presents an overview of the FJO theory applied for thermogravitational columns.

BRIEF DISCLOSURE OF THE INVENTION

The present invention relates to a thermogravitational microcolumn according to claim 1.

It is an object of the invention to provide a thermogravitational microcolumn with an aspect ratio that enables it to fall within the limits of the FJO theory, thereby allowing the calculation of the thermal diffusion coefficient (also known as the thermodiffusion coefficient) of biological fluids and synthetic and biological colloidal fluids, as described in the claims.

The thermogravitational microcolumn of the invention is used to calculate the thermal diffusion coefficient of biological fluids and synthetic and biological colloidal fluids. Said microcolumn comprises a chamber where the biological fluid to be analysed is disposed, which is disposed in a substantially vertical position; a cover on each side of the chamber, both covers withstanding different temperatures, so that a temperature gradient is present between both faces of the chamber; a base plate that comprises the chamber; a transparent means disposed on each side of the chamber, the chamber being delimited by the base plate and the transparent means; and at least one viewing hole so that said chamber can be viewed from the outside through at least one of the transparent means.

As a result, a microcolumn of reduced size can be achieved, with a chamber of reduced size, the use of less biological fluid being necessary than with the microcolumns known to date, which are generally very expensive, encouraging the use of said biological fluids and synthetic and biological colloidal fluids. The use of the invention can thus be centred on a very extensive field or range of possibilities. For example, from a medical viewpoint, the importance of thermodiffusion in biological fluids, such as DNA, lies in the knowledge of their behaviour when exposed to temperature gradients. As a result, current polymerase chain reaction (PCR) systems can be optimised. In addition, the results obtained with the microcolumn 100 of the invention would help with the checking of the results of the thermodiffusion of colloidal systems obtained by means of laser beam deflection, thermal diffusion forced Rayleigh scattering (TDFRS), or by means of the technique of monitoring colloids by fluorescence, and thereby improve and adjust numerical models for the prediction and optimisation of micro-devices.

These and other advantages and characteristics of the invention will be made evident in the light of the drawings and the detailed description thereof.

DESCRIPTION OF THE DRAWINGS

Figure 1 is a perspective view of an embodiment of the microcolumn of the invention.

Figure 2 shows a cover of the microcolumn of Figure 1.

Figure 3 shows a base plate of the microcolumn of Figure 1.

Figure 4 shows a transparent means of the microcolumn of Figure 1.

Figure 5 shows a pressure means of the microcolumn of Figure 1.

Figure 6 is a cross-sectional view showing two transparent means and the base plate of the microcolumn of Figure 1.

Figure 7 is a cross-sectional view showing the pressure means, the transparent means and the base plate of the microcolumn of Figure 1.

Figure 8 is a horizontal cross-sectional view of the microcolumn of Figure 1.

Figure 9 is a vertical cross-sectional view of the microcolumn of Figure 1.

DETAILED DISCLOSURE OF THE INVENTION

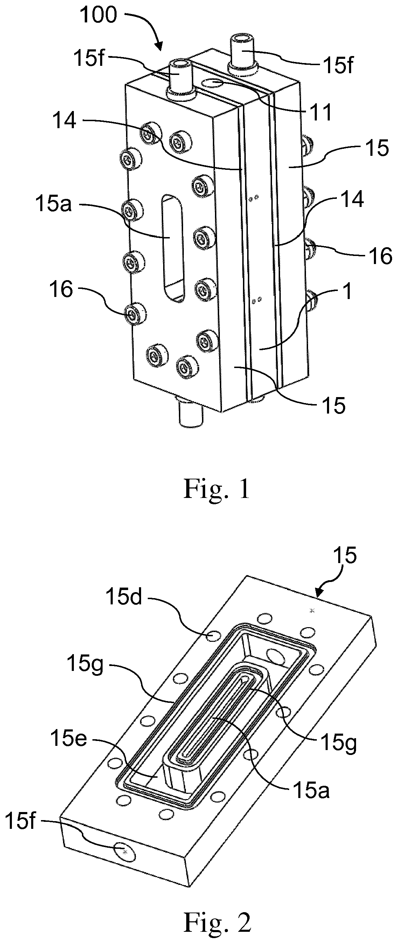

Figure 1 shows an embodiment of the thermogravitational microcolumn 100 of the invention, designed to determine the thermal diffusion coefficient and the degree of separation of biological fluids (or even synthetic and biological colloidal fluids, although throughout the description, and for the purposes of clarity, reference is made only to biological fluids). Said microcolumn 100 comprises a sealed chamber 10 where the biological fluid to be analysed is disposed, which is disposed in a substantially vertical position so that gravity plays a part in distributing the concentration of particles of said biological fluid in said chamber 10, and a cover 15 on each side of the chamber 10, both covers 15 withstanding different temperatures so that a temperature gradient is present between both faces of the chamber 10. The covers 15 have the function of generating the temperature gradient in said chamber 10, one of them serving as a "cold wall" and the other as a "hot wall". Each cover 15 comprises a circuit 15e, shown in Figure 2, which is communicated with the outside by means of at least one hole 15f, where an auxiliary fluid is introduced at a certain temperature. Said auxiliary fluid is preferably water, and an auxiliary cold fluid is introduced in a cover 15, said cover 15 corresponding with the "cold wall", whereas an auxiliary hot fluid is introduced in the other cover 15, said cover 15 corresponding with a "hot wall".

The microcolumn 100 also comprises a base plate 1 that comprises the chamber 10; a transparent means 13 disposed on each side of the chamber 10, covering said chamber 10, the chamber 10 being delimited by the base plate 1 and the transparent means 13; and at least one viewing hole 14a, 15a so that said chamber can be viewed 10 from the outside through at least one of the transparent means 13. Each transparent means 13 is disposed between a corresponding cover 15 and the base plate 1, and thanks to said transparent means 13 the chamber 10 can be kept closed and can also be viewed from the outside. Each cover 15 comprises a viewing hole 15a so that said chamber can be viewed 10 from the outside through at least one of the transparent means 13. Said chamber 10 is preferably rectangular and is disposed substantially vertically.

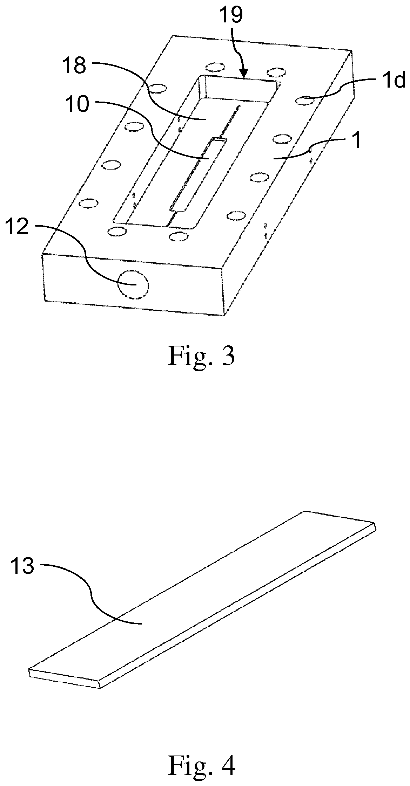

The base plate 1, shown in Figure 3 by way of example, comprises an inlet hole 11 through which the biological fluid to be analysed in the chamber 10 is introduced, and an outlet hole 12 through which said biological fluid can be evacuated from said chamber 10. Preferably the inlet hole 11 is disposed in the upper part of the base plate 1 and the outlet hole 12 in the lower part of said base plate 1.

Each transparent means 13, as well as being optically transparent, is a good transmitter of heat, so that it transmits heat originating from the covers 15 to the chamber 10. Each transparent means 13 preferably corresponds with a sapphire sheet shown by way of example in Figure 4, although any other material that provides the aforementioned optical transparency and thermal conduction properties may also be used.

A microcolumn 100 of a reduced size can thus be achieved, with a chamber 10 of reduced size (30mm x 3mm x 0.5mm, for example), the use of much less biological fluid being required than with thermogravitational columns known to date (a reduction of up to 99%), which in general have a very high cost, thereby encouraging the use of said biological fluids. In addition, the reduced size of the chamber 10 allows the release time to be reduced considerably. As a result, the field or range of possibilities in which the use of this invention may be centred is very extensive. For example, from a medical viewpoint, the importance of thermodiffusion in biological fluids, such as DNA, lies in the knowledge of their behaviour when exposed to temperature gradients. As a result, current polymerase chain reaction (PCR) systems can be optimised. In addition, the results obtained with the microcolumn 100 of the invention would help with the checking of the results of the thermodiffusion of colloidal systems obtained by means of laser beam deflection, thermal diffusion forced Rayleigh scattering (TDFRS), or by means of the technique of monitoring colloids by fluorescence, and thereby improve and adjust numerical models for the prediction and optimisation of micro-devices.

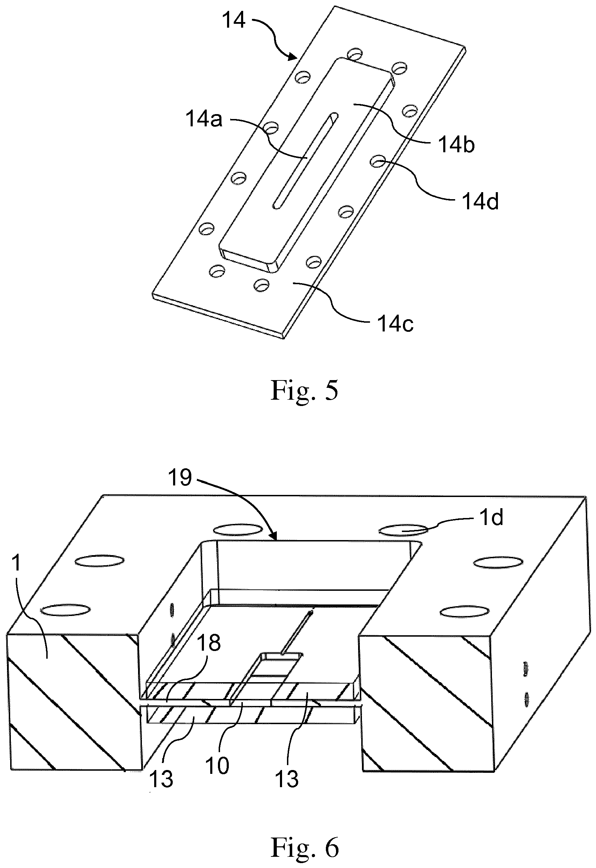

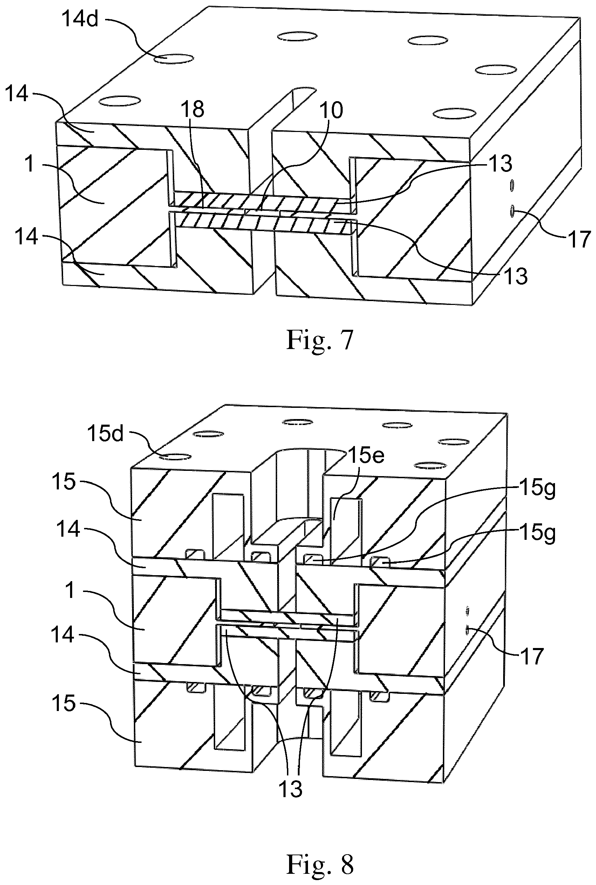

The microcolumn 100 can also comprise a pressure means 14, shown by way of example in Figure 5, for each transparent means 13, in contact with said transparent means 13 to force it against the main support 1 with the purpose of preventing leaks from the chamber 10 and to transmit heat to said chamber 10. The base plate 1 comprises a cavity 19 on each side where the corresponding transparent means 13 are disposed, as shown in Figure 6, the chamber 10 being disposed or formed in a wall 18 that separates both cavities 19, and each pressure means 14 preferably comprises a substantial T shape, with a central longitudinal first section 14b that is disposed in the corresponding cavity 19 to exert pressure on the corresponding transparent means 13, and a transverse second section 14c that is fixed to the base plate 1, as shown in Figure 7. Each cover 15 is disposed on the second section 14c of the corresponding pressure means 14, opposite to the first section 14b, and is fixed to said pressure means 14. Each pressure means 14 preferably corresponds with a plate made of a material that is a good thermal conductor, preferably copper, and with the aforementioned shape, and pushes the corresponding transparent means 13 against the main support 1 (against the chamber 10) to cause the sealed closure of said chamber 10 and prevent biological fluid from leaking from said chamber 10. With the pressure said pressure means 14 transmit heat (or coldness) to the transparent means 13, the temperature gradient being obtained in the chamber 10. Said pressure means 14 comprise a viewing hole 14a so that the fluid disposed inside the chamber 10 can be viewed.

The covers 15, the pressure means 14, the transparent means 13 and the base plate 1 form a block that corresponds with the microcolumn 100, said microcolumn 100 comprising a substantially rectangular shape. The members 1, 14 and 15 are connected to each other by means of screws or equivalent connecting members 16, for which purpose each of them comprises corresponding holes 1d, 14d and 15d, the transparent means 13 thus being trapped.

The main support 1 is preferably chemically resistant to the various fluids or mixtures to be analysed and must be a good thermal insulator in order to generate stable temperature gradients. Said main support 1, as well as comprising the chamber 10 can also comprise a filling system. The filling system is preferably based on a Luer adapter or an equivalent device, for syringes that are threaded or fixed to the main support 1 in at least one of the holes 11 and 12. After that, by means of the inlet through hole 11 of the main support 1 the fluid reaches the cavity 10. Said main support 1 also comprises a plurality of side and transverse holes 17 that communicate the cavities 19 with the outside, through which the temperature in said cavities 19 can be measured by means of thermocouples or equivalent members for example, an approximation of the temperature on both sides the chamber 10 thus being possible to be obtained. The main support 1 is preferably manufactured from a polymer material such as PEEK, for example.

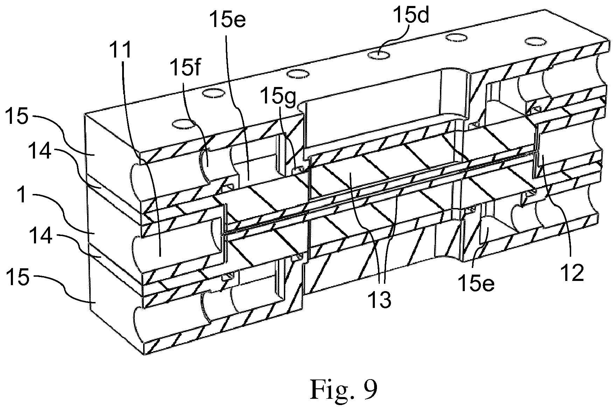

As mentioned above, the covers 15 have the function of generating the temperature gradient in the chamber 10, by means of the auxiliary fluids present in the circuit 15e of each cover 15. Said circuits 15e preferably correspond with a groove that faces the corresponding pressure means 14, said pressure means delimiting the circuits 15e, as shown in Figures 8 and 9. To prevent leaks from said circuit 15e, between each cover 15 and their corresponding pressure means 14 sealing members such as gaskets or O-rings, for example, not shown in the figures are preferably disposed. Preferably, each cover 15 comprises a housing 15g where said sealing member is disposed, although said housing can be formed in the pressure means 14 instead of in the covers 15.

The microcolumn 100 forms part of a system for determining the thermal diffusion coefficient of biological fluids. Said system comprises, in addition to the microcolumn 100 such as the one mentioned above, lighting means (not shown in the figures) that emit light in order to light the chamber 10 of said microcolumn 100 once the biological fluid to be analysed has been disposed in said chamber 10, and photodetector means (not shown in the figures) that receive the light that passes through said chamber 10. The system can also comprise optical means (not shown in the figures) to direct the light emitted by the lighting means towards the chamber 10 for its correct lighting, which can comprise, for example at least one mirror. The lighting means preferably comprise one or more lasers that emit a light beam towards the chamber 10 through the viewing holes 14a and 15a of the microcolumn 100.

A method for determining the thermal diffusion coefficient of biological fluids with the aforementioned system is explained below.

Firstly, the chamber 10 of the microcolumn 100 is filled with the biological fluid for analysis, preferably with said microcolumn 100 disposed in a substantially horizontal position. This step is performed, for example, by means of a syringe or equivalent member that is introduced in the Luer adapter disposed in said inlet hole 11, thereby ensuring that the chamber 10 is filled completely and without bubbles. The insertion can be performed manually, in a gradual manner, for example. When the biological fluid that is introduced flows out from the outlet hole 12, said outlet hole 12 is covered, the syringe is removed from the inlet hole 11 and said inlet hole 11 is covered, so that the fluid is deposited and sealed in the chamber 10, and the microcolumn 100 is disposed in a substantially vertical position.

A temperature gradient is then applied in the chamber 10, perpendicular to the direction of gravity, the auxiliary fluids being introduced in the circuits 15e of the corresponding covers 15 of the microcolumn 100, as commented before. Due to the temperature gradient, a migration of the components parallel to the direction of the thermal gradient comes up, in which one of the components moves towards a hot wall of the chamber 10 and the other towards an opposite cold wall of said chamber 10. As a result of this difference in concentration another migration opposite to the previous one takes place. Finally, as there is a proportion of denser components in one of the walls (cold or hot), a convection is generated as a result of gravity, thus magnifying the separation between the components of the biological fluid.

Once the equilibrium time has been reached, at the end of a preset time period, the concentration at each point of the chamber 10 remains constant, the difference in concentrations throughout the chamber 10 is analysed (at different heights) in order to obtain the thermodiffusion coefficient. For this purpose the lighting means light the chamber 10, the photodetector means receiving the light that passes through the chamber 10, and the refractive index of the light received by said photodetector means is measured with conventional means, which are not described as they are not the object of the invention, and in a manner that is already known, for example by means of measuring the variation of the density of the samples in a stationary state throughout the microcolumn 100, according to the following expression:

$$D_T = -\frac{gL_X^4}{504}\frac{\alpha}{c_R(1-c_R)\beta\eta}\frac{\partial\rho}{\partial z}$$

Where:

- $L_x$: GAP or depth of the chamber 10 of the microcolumn 100,
- $c_R$: the mass fraction of the reference component in the initial homogeneous biological fluid,
-

$$\alpha = -\frac{\partial\rho}{\rho\partial T} \text{ (thermal expansion coefficient),}$$

-

$$\beta = -\frac{1}{\rho}\frac{\partial\rho}{\partial c} \text{ (mass expansion coefficient),}$$

- $\rho$ : the density of the biological fluid,
- $\frac{\partial\rho}{\rho z}$: gradient of the density throughout the microcolumn,
- g: gravitational acceleration, and
- $\eta$: dynamic viscosity.

The chamber 10 is lit at different heights, as a result of which the photodetector means receive light from different heights of said chamber 10, refractive indices being possible to be obtained at different points of the chamber 10. The refractive index varies with the concentration of particles of the biological fluid that passes through the light, so that refractive indices can be obtained from different points of the chamber 10, the difference in concentration being possible to be obtained at different points of said chamber 10. Said lighting means can be formed in three different ways, for example: by using a single laser that moves throughout the microcolumn 100; by using a single laser and by means of a plurality of mirrors to make the laser beam fall on two different heights; or by using two different lasers to obtain information at two different points of said microcolumn 100. In all cases information should at least be obtained on the concentration at two different points of the microcolumn 100 and the location of each point of analysis clearly identified. In the preferred embodiment there is a single laser that falls on two different heights of the microcolumn 100 by means of a plurality of mirrors.

Once the concentration of the chamber 10 has been analysed at the required points, the auxiliary fluids cease to be introduced in the covers 15, the chamber 10 of the microcolumn 100 is emptied, and said chamber 10 is cleaned, a conventional cleaning product being introduced into said chamber 10, for example, in the same manner as the biological fluid to be analysed was introduced.

It should also be added that the method is carried out with the biological fluid under atmospheric pressure, there thus being no need of members for obtaining high and specific pressure levels in the fluid, which would make the system more expensive.

**Claims**

1. Thermogravitational microcolumn comprising a chamber (10) where the fluid to be analysed is disposed, which is disposed in a substantially vertical position and a cover (15) on each side of the chamber (10), both covers (15) withstanding different temperatures, so that a temperature gradient is present between both faces of the chamber (10), **characterised in that** it is adapted for determining the thermal diffusion coefficient of biological fluids and synthetic and biological colloidal fluids and comprises an aspect ratio that enables it to fall within the limits of the FJO theory in order to make possible the calculation of the thermal diffusion coefficient of biological fluids and synthetic and biological colloidal fluids, a base plate (1) disposed between both covers (15) and comprising the chamber (10), a transparent means (13) which is disposed on each side of the chamber (10) and which is optically transparent and thermally conductive, the chamber (10) being delimited by the base plate and the transparent means (13), and at least one viewing hole (15a) in each cover (15) so that said chamber (10) can be viewed from the outside through both transparent means (13).

2. Microcolumn according to claim 1, wherein each transparent means (13) corresponds with a sapphire sheet.

3. Microcolumn according to any of the preceding claims, comprising a pressure means (14) for each transparent means (13), disposed between a cover (15) and the corresponding transparent means (13).

4. Microcolumn according to claim 3, wherein the base plate (1) comprises a cavity (19) on each side of the chamber (10), where the transparent means (13) are disposed, each pressure means (14) comprising a substantial T shape, with a central first section (14b) that is disposed in the corresponding cavity (19) in order to exert pressure on the corresponding transparent means (13), and a transverse second section (14c) fixed to the base plate (1).

5. Microcolumn according to claim 4, wherein the base plate (1) comprises at least one side hole (17) that communicates at least one cavity (19) with the outside.

6. Microcolumn according to any of claims 3 to 5, wherein the covers (15), the pressure means (14) and the base plate (1) are joined to each other, the transparent means (13) being held between the base plate (1) and the corresponding pressure means (14).

7. Microcolumn according to any of claims 3 to 6, wherein the pressure means (14) are made of copper.

8. Microcolumn according to any of claims 3 to 7, wherein the pressure means (14) and the covers (15) comprise at least one respective superimposed viewing hole (14a, 15a), so that the chamber (10) can be viewed from the outside.

9. Microcolumn according to any of the preceding claims, wherein the base plate (1) is made of a polymer material.

10. Microcolumn according to any of the preceding claims, wherein the base plate (1) comprises at least one through hole (11, 12) that communicates the chamber (10) with the outside, so that the biological fluid can be introduced into said chamber (10) from the outside.

11. Microcolumn according to any of the preceding claims, wherein each cover (15) comprises a circuit (15e) where an auxiliary fluid is introduced, said auxiliary fluids of a cover (15) and of the other one comprising different temperatures, the temperature gradient being obtained by means of said auxiliary fluids.

**Patentansprüche**

1. Thermogravitations-Mikrosäule umfassend eine Kammer (10), in der das zu analysierende Fluid angeordnet ist, die in einer im Wesentlichen vertikalen Position angeordnet ist, und eine Abdeckung (15) auf jeder Seite der Kammer (10), wobei beide Abdeckungen (15) unterschiedlichen Temperaturen standhalten, sodass zwischen beiden Stirnseiten der Kammer (10) ein Temperaturgradient vorliegt, **dadurch gekennzeichnet, dass** sie zur Bestimmung des Thermodiffusionskoeffizienten biologischer Flüssigkeiten und synthetischer und biologischer Kolloidflüssigkeiten angepasst ist und ein Seitenverhältnis umfasst, das es ihr ermöglicht, innerhalb der Grenzen der FJO-Theorie zu liegen, um die Berechnung des Thermodiffusionskoeffizienten biologischer Flüssigkeiten und synthetischer und biologischer Kolloidflüssigkeiten zu ermöglichen, eine zwischen den beiden Abdeckungen (15) angeordnete Grundplatte (1), wobei die Kammer (10) ein transparentes Mittel (13) umfasst, das auf jeder Seite der Kammer (10) angeordnet ist und optisch transparent und wärmeleitfähig ist, wobei die Kammer (10) von der Grundplatte und dem transparenten Mittel (13) und mindestens einer Sichtöffnung (15a) in jeder Abdeckung (15) begrenzt ist, sodass die genannte Kammer (10) durch die beiden transparenten Mittel (13) von außen einsehbar ist.

2. Mikrosäule nach Anspruch 1, wobei jedes transparente Mittel (13) einer Saphirplatte entspricht.

3. Mikrosäule nach einem der vorstehenden Ansprüche, umfassend ein Druckmittel (14) für jedes transparente Mittel (13), das zwischen einer Abdeckung (15) und dem entsprechenden transparenten Mittel (13) angeordnet ist.

4. Mikrosäule nach Anspruch 3, wobei die Grundplatte (1) auf jeder Seite der Kammer (10) eine Aussparung (19) umfasst, in der die transparenten Mittel (13) angeordnet sind, wobei jedes Druckmittel (14) eine wesentliche T-Form mit einem mittleren ersten Teil, der in der entsprechenden Aussparung (19) angeordnet ist, um Druck auf das entsprechende transparente Mittel (13) auszuüben, und einen an der Grundplatte (1) befestigten zweiten, querliegenden Teil (14c) umfasst.

5. Mikrosäule nach Anspruch 4, wobei die Grundplatte (1) mindestens ein seitliches Loch (17) aufweist, das mindestens eine Aussparung (19) mit der Außenseite verbindet.

6. Mikrosäule nach einem der Ansprüche 3 bis 5, wobei die Abdeckungen (15), die Druckmittel (14) und die Grundplatte (1) miteinander verbunden sind und die transparenten Mittel (13) zwischen der Grundplatte (1) und den entsprechenden Druckmitteln (14) gehalten werden.

7. Mikrosäule nach einem der Ansprüche 3 bis 6, wobei die Druckmittel (14) aus Kupfer bestehen.

8. Mikrosäule nach einem der Ansprüche 3 bis 7, wobei die Druckmittel (14) und die Abdeckungen (15) mindestens eine jeweils überlagerte Sichtöffnung (14a, 15a) umfassen, sodass die Kammer (10) von außen einsehbar ist.

9. Mikrosäule nach einem der vorstehenden Ansprüche, wobei die Grundplatte (1) aus einem Polymermaterial besteht.

10. Mikrosäule nach einem der vorstehenden Ansprüche, wobei die Grundplatte (1) mindestens ein Durchgangsloch (11, 12) umfasst, das die Kammer (10) mit der Außenseite verbindet, so dass das biologische Fluid von außen in die genannte Kammer (10) eingeführt werden kann.

11. Mikrosäule nach einem der vorstehenden Ansprüche, wobei jede Abdeckung (15) einen Kreislauf (15e) umfasst, in den ein Hilfsfluid eingeführt wird, wobei die genannten Hilfsfluide einer Abdeckung (15) und der anderen Abdeckung jeweils unterschiedliche Temperaturen aufweisen und das Temperaturgradient mittels der genannten Hilfsfluide erzielt wird.

**Revendications**

1. Micro-colonne thermo-gravitationnelle comprenant une chambre (10) dans laquelle est disposé le fluide à analyser, qui est disposée dans une position sensiblement verticale et un couvercle (15) de chaque côté de la chambre (10), les deux couvercles (15) supportant des températures différentes, de sorte qu'un gradient de température est présent entre les deux faces de la chambre (10), **caractérisé en ce qu'**elle est adaptée pour déterminer le coefficient de diffusion thermique des fluides biologiques et fluides colloïdes synthétiques et biologiques et comprend un rapport d'aspect qui lui permet de se situer dans les limites de la théorie FJO afin de rendre possible le calcul du coefficient de diffusion thermique des fluides biologiques et fluides colloïdes synthétiques et biologiques, une plaque de base (1) disposée entre les deux couvercles (15) et comprenant la chambre (10), un moyen transparent (13) qui est disposé de chaque côté de la chambre (10) et qui est optiquement transparent et thermiquement conducteur, la chambre (10) étant délimitée par la plaque de base et le moyen transparent (13), et au moins un trou de visualisation (15a) dans chaque couvercle (15) de sorte que ladite chambre (10) peut être observée de l'extérieur par les deux moyens transparents (13).

2. Micro-colonne selon la revendication 1, dans laquelle chaque moyen transparent (13) correspond à une feuille de saphir.

3. Micro-colonne selon l'une quelconque des revendications précédentes, comprenant un moyen de pression (14) pour chaque moyen transparent (13), disposé entre un couvercle (15) et le moyen transparent correspondant (13).

4. Micro-colonne selon la revendication 3, dans laquelle la plaque de base (1) comprend une cavité (19) de chaque côté de la chambre (10), où sont disposés les moyens transparents (13), chaque moyen de pression (14) comprenant une forme en T substantielle, avec une première section centrale (14b) qui est disposée dans la cavité correspondante (19) pour exercer une pression sur le moyen transparent correspondant (13) et une deuxième section transversale (14c) fixée sur la plaque de base (1).

5. Micro-colonne selon la revendication 4, dans laquelle la plaque de base (1) présente au moins un trou latéral (17) qui communique au moins une cavité (19) avec l'extérieur.

6. Micro-colonne selon l'une quelconque des revendications 3 à 5, dans laquelle les couvercles (15), les moyens de pression (14) et la plaque de base (1) sont reliés entre eux, les moyens transparents (13) étant maintenus entre la plaque de base (1) et les moyens de pression correspondants (14).

7. Micro-colonne selon l'une quelconque des revendications 3 à 6, dans laquelle les moyens de pression (14) sont en cuivre.

8. Micro-colonne selon l'une quelconque des revendications 3 à 7, dans laquelle les moyens de pression (14) et les couvercles (15) comprennent au moins un trou de visualisation superposé respectif (14a, 15a), de sorte que la chambre (10) peut être observée de l'extérieur.

9. Micro-colonne selon l'une quelconque des revendications précédentes, dans laquelle la plaque de base (1) est réalisée en un matériau de polymère.

10. Micro-colonne selon l'une quelconque des revendications précédentes, dans laquelle la plaque de base (1) comprend au moins un trou traversant (11, 12) qui communique la chambre (10) avec l'extérieur, de sorte que le fluide biologique peut être introduit dans ladite chambre (10) depuis l'extérieur.

11. Micro-colonne selon l'une quelconque des revendications précédentes, dans laquelle chaque couvercle (15) comprend un circuit (15e) où un fluide auxiliaire est introduit, lesdits fluides auxiliaires d'un couvercle (15) et de l'autre comprenant différentes températures, le gradient de température étant obtenu au moyen desdits fluides auxiliaires.

Fig. 1

Fig. 2

Fig. 3

Fig. 4

Fig. 5

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2852578 A
- GB 725754 A
- GB 725753 A
- US 2723033 A
- US 20060134683 A1

**Non-patent literature cited in the description**

- **P. BLANCO ; M. M. BOU-ALI ; J. K. PLATTEN ; D. ALONSO DE MEZQUIA ; J. A. MADARIAGA ; C. SANTAMARÍA.** Thermodiffusion coefficients of binary and ternary hydrocarbon mixtures. *J. Chem. Phys.,* 2010, vol. 132, 114506
- Validity Limits of the FJO Thermogravitational Column Theory. **JAVIER VALENCIA et al.** Thermal Non-equilibrium Phenomena in Fluid Mixtures. Springer, 01 January 2002, 233-249